# FASCICULE DE BREVET EUROPEEN

(11) **EP 0 967 767 B1**
(45) Date de publication et mention de la délivrance du brevet: **22.10.2003**
(21) Numéro de dépôt: 99401215.1
(22) Date de dépôt: 20.05.1999
(51) Int. Cl.: H04L 29/06

(54) **Procédé de communication en temps réel sur l'internet et terminal pour la mise en oeuvre du procédé**
Echtzeit-Kommunikationsverfahren auf dem Internet und Endgerät für die Durchführung des Verfahrens
Real time communication method on the internet and terminal for applying this method

(30) Priorité: 29.05.1998 FR 9806818
(43) Date de publication de la demande: 29.12.1999
(73) Titulaire: SAGEM SA, 75116 Paris (FR)
(72) Inventeur: Charbonnier, Philippe, 78600 Le Mesnil le Roi (FR)
(74) Mandataire: Bloch, Gérard

(56) Documents cités:
- EP-A- 0 669 733
- EP-A- 0 818 916
- YU S -F ET AL: "A multimedia gateway for phone/fax and MIME mail" COMPUTER COMMUNICATIONS, vol. 20, no. 8, 25 août 1997 (1997-08-25), page 615-627 XP004126715
- HUI S -C ET AL: "A dynamic IP addressing system for Internet telephony applications" COMPUTER COMMUNICATIONS, vol. 21, no. 3, 25 mars 1998 (1998-03-25), page 254-266 XP004115293

## Description

Dans le domaine des communications, un réseau informatique tel que l'Internet permet à des terminaux, connectés à ce réseau, de communiquer entre eux en échangeant des courriers électroniques, par boîtes à lettres interposées, ou en dialoguant en temps réel.

Généralement, un terminal de communication sur l'Internet (ordinateur personnel, télécopieur, etc.) ne se connecte à l'Internet, par l'intermédiaire d'un serveur d'accès, que lorsqu'il souhaite envoyer un courrier électronique à un correspondant, consulter des informations sur un site, naviguer sur différents sites ou, encore à titre d'exemple, communiquer en temps réel avec un autre terminal à travers l'Internet.

Pour que deux terminaux établissent entre eux une communication en temps réel à travers l'Internet, il convient qu'ils soient tous deux, et en même temps, connectés à l'Internet. Si un terminal appelant souhaite communiquer en temps réel, à travers l'Internet, avec un terminal appelé non connecté à l'Internet, le terminal appelant peut adresser à son serveur d'accès une requête aux fins de se mettre en relation avec le terminal appelé. Le serveur d'accès du terminal appelant contacte alors le serveur d'accès du terminal appelé et lui transmet la requête. Le serveur d'accès du terminal appelé avertit, ou notifie, celui-ci que le terminal appelant souhaite communiquer avec lui en temps réel à travers l'Internet, par exemple par un appel téléphonique dans l'hypothèse où le terminal appelé est relié à son serveur d'accès par un réseau téléphonique (réseau téléphonique commuté RTC, ou réseau numérique à intégration de services RNIS, ou autre). Enfin, après réception de la notification, le terminal appelé se connecte à l'Internet et entame une session de communication en temps réel avec le terminal appelant.

Une telle solution s'avère cependant coûteuse, car le terminal appelant doit généralement s'acquitter du coût du service particulier de notification rendu par les serveurs d'accès. En outre, elle suppose l'existence d'accords entre les serveurs d'accès, ce qui n'est pas toujours le cas.

La présente invention propose de pallier ces inconvénients.

A cet effet, l'invention concerne un procédé de communication selon la revendication 1.

On remarque que dans EP. A. 0669733, il ne s'agit pas d'une fixation de rendez-vous par les terminaux au cours d'une communication préalable avant mise en relation des terminaux au moment du rendez-vous.

Ce document de l'art antérieur enseigne une requête de l'utilisateur appelant et une prise en compte de la requête par l'utilisateur appelé et, dans l'intervalle alloué par l'appelant, l'appelé devient appelant.

Dans "A dynamic IP addressing system for internet telephony applications" (Computer communications vol. 21; no. 3; 25 mars 1998) on divulge le transfert d'un message au préalable où on indique une heure limite pour l'établissement d'une communication en temps réel.

Dans le cas où les terminaux sont des télécopieurs disposant d'un accès à l'Internet, ils peuvent ainsi se donner rendez-vous sur l'Internet, à une heure déterminée, et, lors de la communication en temps réel sur l'Internet, s'échanger leurs capacités, se transmettre une télécopie et acquitter la réception de celle-ci. L'échange de capacités, la transmission de la télécopie et l'acquittement de sa réception s'accomplissent dans une communication unique, d'un seul tenant, comme lors d'une communication ordinaire à travers un réseau téléphonique.

Avantageusement, l'un des deux terminaux fixe le rendez-vous à l'autre terminal, par courrier électronique.

Dans une variante, les deux terminaux se fixent le rendez-vous, au cours d'une communication à travers un réseau de communication autre que ledit réseau informatique.

Dans une autre variante, les deux terminaux se fixent le rendez-vous, au cours d'une communication en temps réel à travers ledit réseau informatique.

Avantageusement, les deux terminaux disposant chacun d'une adresse électronique sur ledit réseau informatique, l'un des terminaux envoie à l'autre terminal son adresse électronique par courrier électronique, de façon à ce que les deux terminaux se mettent en relation l'un avec l'autre.

Dans un autre mode de réalisation, les deux terminaux disposant chacun d'une adresse électronique sur ledit réseau informatique, au moins l'un des terminaux transmet son adresse électronique à l'autre terminal par l'intermédiaire d'un serveur de rendez-vous, de façon à ce que les deux terminaux se mettent en relation l'un avec l'autre.

L'invention concerne aussi un terminal de communication comprenant des moyens applicatifs pour la mise en oeuvre du procédé ci-dessus.

L'invention sera mieux comprise à l'aide de la description suivante de différents modes de réalisation du procédé de communication de l'invention et du terminal de communication pour la mise en oeuvre du procédé en référence au dessin annexé sur lequel:

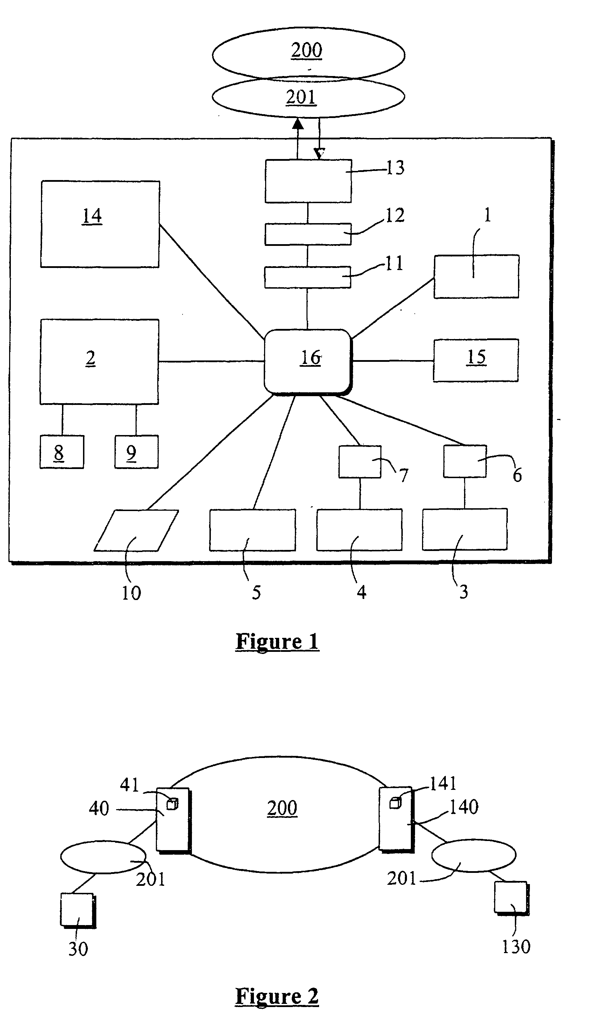

- la figure 1 représente un schéma bloc fonctionnel du terminal et
- la figure 2 représente un schéma de deux terminaux de communication à travers l'Internet.

Le procédé de communication décrit plus loin est destiné à faire communiquer l'un avec l'autre deux terminaux de communication 30, 130, en temps réel, à travers un réseau informatique, en l'espèce l'Internet 200.

Dans l'exemple particulier de la description, les terminaux 30, 130 sont deux télécopieurs, identiques.

Chaque télécopieur 30, 130 dispose d'un accès à l'Internet 200 auprès d'un serveur d'accès 40, 140, d'une adresse électronique sur l'Internet 200 et d'une boîte à lettres 41, 141, de réception de courriers électroniques, auprès du serveur d'accès 40, 140.

L'adresse électronique d'un terminal sur l'Internet 200 s'entend d'une indication permettant de localiser ce terminal sur l'Internet 200. En fait, une adresse électronique peut s'exprimer sous deux formes équivalentes, l'une numérique et l'autre textuelle. L'adresse électronique consiste, dans sa forme numérique, en une succession de chiffres, et, dans sa forme textuelle, en une succession de caractères correspondant à des noms (nom d'utilisateur et noms de domaine). La forme numérique de l'adresse électronique, plus couramment appelée "adresse IP" (Internet Protocol), est utilisée par l'Internet 200 pour acheminer les données, alors que la forme textuelle équivalente, que l'on appellera par la suite "adresse Internet textuelle", plus explicite et plus facile à retenir, est celle qu'utilisent les utilisateurs de l'Internet 200.

Les adresses Internet textuelles des télécopieurs 30, 130 sont fixes, attribuées définitivement. En revanche, les adresses IP correspondantes sont provisoires, nouvellement attribuées par les serveurs d'accès 40, 140 à chacune des connexions à l'Internet 200 des télécopieurs 30, 130.

L'un des télécopieurs, en l'espèce le télécopieur 30, va maintenant être décrit.

Le télécopieur 30 comprend un bloc 1 de connexion à l'Internet 200, un bloc 2 de gestion de courriers électroniques, un analyseur d'image 3, une imprimante 4, un écran de visualisation 5 et un clavier de saisie 10.

L'analyseur 3 et l'imprimante 4 sont respectivement reliés à une mémoire d'émission 6 de stockage de télécopies à émettre et à une mémoire de réception 7 de stockage de télécopies reçues.

Le bloc 2 de gestion de courriers électroniques est relié à une mémoire de réception 8 de stockage de courriers reçus et à une mémoire d'émission 9 de stockage de courriers à émettre, et comprend un logiciel comportant notamment les applications suivantes:
- préparation de courriers électroniques,
- consultation de la boîte à lettres 41 en mode lent, avec une fréquence lente, ici toutes les heures,
- consultation de la boîte à lettres 41 en mode rapide, avec une fréquence rapide, ici toutes les minutes,
- rapatriement de courriers électroniques, de la boîte à lettres 41 dans la mémoire de réception 8,
- édition (par impression ou visualisation) de courriers électroniques,
- mise en attente d'émission dans la mémoire d'émission 9 de courriers électroniques à émettre et
- déclenchement de l'émission de courriers électroniques.

Le télécopieur 30 comprend également, en mémoire 15, un protocole de transmission de télécopie à travers l'Internet 200. Il s'agit d'un protocole de télécopie, du type du protocole standard T30 de transmission de télécopie à travers un réseau téléphonique, adaptée ici pour fonctionner par-dessus le protocole TCP/IP et comprenant les trois phases successives suivantes:
1) négociation: les télécopieurs s'échangent leurs capacités et négocient divers paramètres, notamment le débit de transmission des données, pour la transmission de la télécopie,
2) transmission: la télécopie est transmise selon les pararnètres précédemment définis et
3) acquittement: le télécopieur récepteur envoie au télécopieur émetteur un acquittement de réception de la télécopie.

Le télécopieur 30 comporte encore un bloc de traitement TCP/IP 11, explicité plus loin, un modem 12 relié au bloc de traitement TCP/IP 11 et à un bloc d'émission et de réception 13 connecté à un réseau téléphonique, en l'espèce le réseau téléphonique commuté RTC 201.

Le bloc de traitement TCP/IP 11 est destiné, en émission, à décomposer les données à émettre en paquets de données, suivant un protocole de communication de l'Internet 200, en l'espèce le protocole standard TCP/IP (Transfer Control Protocol / Internet Protocol - Protocole de contrôle de transmission / Protocole Internet), et, en réception, à rassembler convenablement les données à l'aide de paquets de données reçus, suivant le protocole TCP/IP.

Par la suite, on appellera "paquets de données TCP/IP", les paquets de données établis suivant le protocole TCP/IP.

Le modem 12 est destiné, de façon classique, à moduler les données à émettre sur le réseau RTC 201 et à démoduler les signaux de données reçus par le réseau RTC 201.

Enfin, le télécopieur 30 comprend un bloc 14 de gestion de rendez-vous sur l'Internet 200, explicité plus loin, et un bloc de contrôle 16, en l'espèce un microprocesseur, destiné à contrôler le fonctionnement du télécopieur 30 et auquel sont reliés tous les éléments du télécopieur 30.

Le bloc 14 de gestion de rendez-vous sur l'Internet 200 comprend un logiciel comportant les applications suivantes, plus précisément explicitées dans la description du procédé de communication:
- préparation et émission d'un courrier électronique de prise de rendez-vous,
- préparation et émission d'un courrier électronique de mise en relation,
- examen des courriers reçus afin d'y rechercher des champs spécifiques, de rendez-vous ou de mise en relation, et, le cas échéant, prise de connaissance du contenu de ces champs.

Le bloc de gestion de rendez-vous 14 comprend en outre, en mémoire, un carnet de rendez-vous contenant des rendez-vous du télécopieur 30 avec d'autres télécopieurs, sur l'Internet 200, et les caractéristiques de ces rendez-vous (moment du rendez-vous, mode de mise en relation, etc.).

D'une façon générale, un courrier électronique comprend notamment un champ de provenance contenant l'adresse Internet textuelle du terminal ayant émis le courrier et un champ de destination contenant l'adresse Internet textuelle du terminal auquel est destiné le courrier.

Un courrier électronique de prise de rendez-vous comprend en outre un champ spécifique, de rendez-vous, contenant un mot de commande, explicité plus loin, et le moment du rendez-vous.

Un courrier de mise en relation comprend en outre un champ spécifique, de mise en relation, contenant l'adresse IP du télécopieur ayant émis le courrier.

Après la description structurelle du télécopieur 30, le procédé de communication en temps réel, à travers l'Internet 200, des deux télécopieurs 30 et 130 va maintenant être décrit.

Par souci de clarté, les éléments du télécopieur 130 porteront des références dont les valeurs sont égales aux valeurs des références des éléments correspondants du télécopieur 30, incrémentées de cent.

Le procédé de communication comprend les étapes suivantes:
1) prise de rendez-vous
2) mise en relation à travers l'Internet 200 et
3) session de communication en temps réel à travers l'Internet 200.

Ces étapes vont maintenant être explicitées.

### 1) Prise de rendez-vous

L'un des terminaux, ici le terminal 30, prépare un courrier de prise de rendez-vous, afin de fixer un rendez-vous au télécopieur 130, sur l'Internet 200, à un moment ultérieur déterminé t₁. Ce moment consiste en une date et une heure précises, en l'espèce le jour même à 22h00. Le télécopieur 30 souhaite, à l'occasion de ce rendez-vous, transmettre une télécopie, préalablement enregistrée dans la mémoire d'émission 6, au télécopieur 130.

Sous la commande du bloc 14 de gestion de rendez-vous, le bloc 2 de gestion des courriers électroniques prépare le courrier de prise de rendez-vous qui comprend:
- un champ de provenance contenant l'adresse Internet textuelle du télécopieur 30,
- un champ de destination contenant l'adresse Internet textuelle du télécopieur 130 et
- un champ de rendez-vous contenant le moment t₁ du rendez-vous, "22h00", suivi d'un mot de commande, en l'espèce "TU", destiné à commander au télécopieur destinataire 130 de consulter sa boîte à lettres 141, en mode rapide, sensiblement au moment t₁ du rendez-vous.

L'indication d'un moment de rendez-vous dans le champ de rendez-vous constitue en soi une notification du rendez-vous.

Puis, sous la commande du bloc 14 et à l'aide du bloc de connexion 1, le télécopieur 30 se connecte à son serveur d'accès 40, par liaison téléphonique à travers le réseau RTC 201, afin de se connecter à l'Internet 200.

Après connexion à l'Internet 200, sous la commande du bloc 14, le télécopieur 30 transmet à son serveur d'accès 40, via le réseau RTC 201, le courrier de prise de rendez-vous. Le courrier de prise de rendez-vous est ensuite acheminé par l'Internet 200 du serveur d'accès 40 au serveur d'accès 140 qui le stocke dans la boîte à lettres 141 du télécopieur 130.

Côté télécopieur 130, l'application de consultation en mode lent de la boîte à lettres 141 étant activée, le télécopieur 130 consulte sa boîte à lettres 141 automatiquement, toutes les heures, et, à l'occasion de l'une de ces consultations, à l'instant t₀, y trouve le courrier de prise de rendez-vous, le rapatrie et le stocke dans la mémoire de réception 108.

Puis, à l'aide du bloc 114, le télécopieur 130 examine le courrier de prise de rendez-vous en y recherchant un champ spécifique, y trouve le champ de rendez-vous et prend connaissance du contenu de ce champ, autrement dit du mot de commande de consultation en mode rapide de la boîte à lettres 141 et du moment t₁ du rendez-vous.

Par hypothèse, l'instant t₁ est postérieur à l'instant t₀ de réception effective du courrier de prise de rendez-vous par le télécopieur 130.

La transmission du courrier électronique de prise de rendez-vous du télécopieur 30 au télécopieur 130 constitue une communication, préalable au rendez-vous, au cours de laquelle le télécopieur 30 fixe au télécopieur 130 un rendez-vous sur l'Internet 200, à un moment ultérieur déterminé t₁.

### 2) Mise en relation des deux télécopieurs à travers l'Internet

Quelques instants avant le moment t₁ du rendez-vous, ici à 21h55, le télécopieur 30, sous la commande du bloc 14 et à l'aide du bloc 2, prépare un courrier électronique de mise en relation comprenant:
- un champ de provenance contenant son adresse Internet textuelle,
- un champ de destination contenant l'adresse Internet textuelle du télécopieur 130 et
- un champ spécifique, de mise en relation, destiné à contenir l'adresse IP qui sera attribuée au télécopieur 30 à sa prochaine connexion au serveur 40.

Puis, peu avant le moment t₁ du rendez-vous, ici à 21h58 et à 21h59 respectivement, les deux télécopieurs 30 et 130 se connectent chacun à leur serveur d'accès 40, 140, par liaison téléphonique à travers le réseau RTC 201, afin de se connecter à l'Internet 200.

En se connectant à l'Internet 200, les deux télécopieurs 30, 130 acquièrent chacun une nouvelle adresse IP, attribuée par leur serveur d'accès 40, 140.

Le télécopieur 30 complète alors le courrier de mise en relation en indiquant sa nouvelle adresse IP dans le champ de mise en relation.

Puis, à environ 22h00, sensiblement au moment t₁ du rendez-vous fixé, le télécopieur 30 transmet le courrier de mise en relation à son serveur d'accès 40 qui l'envoie, à travers l'Internet 200, au serveur d'accès 140 qui le stocke dans la boîte à lettres 141 du télécopieur 130.

Après s'être connecté à l'Internet 200, sensiblement au moment du rendez-vous t₁, le télécopieur 130 active l'application de consultation en mode rapide de sa boîte à lettres 141 afin de consulter fréquemment, toutes les minutes, sa boîte à lettres 141. A l'occasion de l'une de ces consultations, à 22h02, le télécopieur 130 trouve le courrier de mise en relation dans la boîte à lettres 141, le rapatrie et le stocke dans sa mémoire de réception 108.

A l'aide du bloc 114 de gestion de rendez-vous, le télécopieur 130 examine le courrier de mise en relation en y recherchant le champ de mise en relation, prend connaissance du contenu de ce champ, autrement dit de l'adresse IP actuelle du télécopieur 30, et transmet à celui-ci des premiers paquets de données TCP/IP, à travers l'Internet 200, en entamant ainsi une session de communication en temps réel avec le télécopieur 30.

On notera ici que les paquets TCP/IP acheminés à travers l'Internet 200 véhiculent chacun l'adresse IP de leur provenance, ainsi que l'adresse IP de leur destination.

Après avoir émis le courrier de mise en relation, le télécopieur 30 reste connecté à l'Internet 200 en attendant de recevoir les premiers paquets de données TCP/IP provenant du télécopieur 130. A la réception de ceux-ci, le télécopieur 30 en extrait l'adresse IP actuelle du télécopieur 130.

Les deux télécopieurs 30, 130 se sont ainsi échangés leurs adresses IP actuelles et se sont mis en relation l'un avec l'autre, à travers l'Internet 200.

### 3) Session de communication en temps réel à travers l'Internet

Les deux télécopieurs 30, 130 entament donc la session de communication en temps réel à travers l'Internet 200, au cours de laquelle ils dialoguent l'un avec l'autre en temps réel, ou "en direct", en full duplex, sans boîte à lettres interposée, en s'échangeant des paquets de données TCP/IP. Les deux télécopieurs 30, 130 établissent ainsi entre eux un "lien TCP/IP", selon le vocabulaire utilisé par l'homme du métier.

La session de communication en temps réel entre les deux télécopieurs 30, 130 comprend trois phases, définies par le protocole de transmission de télécopie à travers l'Internet mémorisé (15, 115) dans les deux télécopieurs 30, 130.
Phase 1: les deux télécopieurs s'échangent leurs capacités, et négocient divers paramètres de communication, et notamment le débit de transmission des données, selon un protocole d'échange du protocole de télécopie.
Phase 2: le télécopieur 30 transmet au télécopieur 130 la télécopie qui lui est destinée, stockée dans la mémoire d'émission 6.
Phase 3: après transmission de la télécopie, le télécopieur 130 en acquitte la réception en transmettant au télécopieur 30 un acquittement de réception.

On vient de décrire le cas où les deux télécopieurs sont présents au rendez-vous fixé. Il peut cependant arriver que l'un des télécopieurs manque le rendez-vous.

Dans le cas où c'est le télécopieur 130 qui manque le rendez-vous, le télécopieur 30, après avoir envoyé le courrier de mise en relation, attend en vain de recevoir les premiers paquets de données TCP/IP provenant du télécopieur 130, pendant une durée d'attente prédéfinie. A l'expiration de cette durée, le télécopieur 30 transmet au télécopieur 130 la télécopie qui lui est destinée par courrier électronique. Celui-ci est acheminé à travers l'Intemet 200 et stocké dans la boîte à lettres 141 du télécopieur 130. Le rendez-vous manqué constituant pour le télécopieur 130 une notification implicite de la réception, dans sa boîte à lettres 141, d'un courrier électronique, le télécopieur 130, après avoir manqué le rendez-vous, consulte en mode de consultation rapide sa boîte à lettres 141, y trouve le courrier contenant la télécopie et le rapatrie dans sa mémoire de réception 108.

Dans l'hypothèse encore où l'un des télécopieurs manque le rendez-vous (30 ou 130), l'autre télécopieur, présent au rendez-vous, pourrait attendre pendant une durée d'attente prédéfinie et, à l'expiration de cette durée, envoyer au télécopieur ayant manqué le rendez-vous un courrier électronique fixant un nouveau rendez-vous, à un moment ultérieur déterminé.

Dans la description qui vient d'être faite, le télécopieur 30 fixe rendez-vous au télécopieur 130 et, sensiblement au moment du rendez-vous, lui envoie son adresse IP actuelle par courrier électronique. On pourrait également envisager que ce soit le télécopieur 130, à qui le rendez-vous a été fixé, qui, sensiblement au moment du rendez-vous, envoie son adresse IP par courrier électronique au télécopieur 30. Dans ce cas, le courrier de prise de rendez-vous, envoyé par le télécopieur 30 au télécopieur 130, comprendrait, à la place du mot de commande de consultation en mode rapide de la boîte à lettres, un mot pour commander au télécopieur 130 d'envoyer son adresse IP par courrier électronique sensiblement au moment du rendez-vous.

Au cours de la session de communication en temps réel à travers l'Internet 200, les deux télécopieurs 30, 130 pourraient également en profiter pour se fixer un nouveau rendez-vous sur l'Internet 200, à un moment ultérieur déterminé, pour communiquer l'un avec l'autre en temps réel.

Les deux télécopieurs pourraient également être agencés pour communiquer à travers le réseau téléphonique RTC 201. Dans ce cas, ils pourraient se fixer un rendez-vous à un moment ultérieur déterminé, au cours d'une communication préalable à travers le réseau RTC 201, par exemple à l'occasion de la transmission d'une télécopie, par des trames spécifiques du protocole de télécopie, ou à l'occasion d'une communication spécifique de prise de rendez-vous.

Dans une variante du procédé de communication, pour se mettre en relation l'un avec l'autre, les deux télécopieurs s'échangent leurs adresses IP respectives par l'intermédiaire d'un serveur de rendez-vous de l'Internet 200. Sensiblement au moment du rendez-vous, chaque télécopieur se connecte à l'Internet 200 et adresse au serveur de rendez-vous une requête aux fins d'obtenir l'adresse IP actuelle de l'autre télécopieur.

Le procédé de communication en temps réel, à travers l'Internet 200, du télécopieur 30 avec une pluralité de télécopieurs, ici au nombre de quatre (A, B, C, D), tous identiques au télécopieur 30, va maintenant être décrit.

D'emblée on notera que le protocole de communication TCP/IP permet à un terminal de multiplexer une pluralité de communications en temps réel à travers l'Internet 200, ou liens TCP/IP, avec d'autres terminaux.

Le télécopieur 30 fixe des rendez-vous à un moment ultérieur déterminé t₁, ici à 22h00 le jour même, aux télécopieurs A, B, C et D, en leur envoyant un courrier électronique de prise de rendez-vous. Le télécopieur 30 souhaite, à l'occasion de ces rendez-vous, transmettre une télécopie à chacun de ces télécopieurs. Les courriers de prise de rendez-vous contiennent chacun, comme précédemment explicité, dans un champ de rendez-vous, le moment t₁ du rendez-vous et un mot de commande pour commander aux télécopieurs A, B, C et D de consulter fréquemment leur boîte à lettres sensiblement au moment t₁ du rendez-vous.

Les télécopieurs A, B, C et D, comme précédemment décrit, rapatrient le courrier de prise de rendez-vous, à l'occasion d'une consultation de leur boîte à lettres, et prennent connaissance du moment du rendez-vous et du mot de commande associé.

Peu avant l'instant t₁ du rendez-vous, ici à 21h58, le télécopieur 30 se connecte à l'Internet 200, par l'intermédiaire de son serveur d'accès 40, acquiert ainsi une nouvelle adresse IP et envoie à chacun des télécopieurs A, B, C, D un courrier de mise en relation. Celui-ci contient, dans un champ de mise en relation, la nouvelle adresse IP actuelle du télécopieur 30. Puis le télécopieur 30, tout en restant connecté à l'Internet 200, attend de recevoir des paquets TCP/IP provenant des télécopieurs A, B, C et/ou D.

A environ 22h00, sensiblement au moment t₁ du rendez-vous, chacun des télécopieurs B, C et D se connecte à l'Internet 200, consulte sa boîte à lettres en mode rapide, y trouve le courrier de mise en relation, le rapatrie, l'examine, prend connaissance de l'adresse IP du télécopieur 30 et enfin envoie les premiers paquets de données TCP/IP au télécopieur 30, en entamant ainsi une session de communication en temps réel avec celui-ci.

A 22h01, 22h03 et 22h06, le télécopieur 30 reçoit les premiers paquets TCP/IP provenant des télécopieurs B, C et D respectivement, en extrait l'adresse IP actuelle de chacun de ces télécopieurs et poursuit les trois sessions de communication en temps réel entamées avec les télécopieurs B, C et D, comme précédemment explicité. Au cours de ces trois sessions de communication en temps réel, qui sont au moins en partie simultanées, le télécopieur 30 transmet une télécopie à chacun des télécopieurs B, C et D, à travers l'Internet 200, suivant le protocole de télécopie précédemment explicité.

A 22h07, alors que la session de communication en temps réel entre le télécopieur 30 et le télécopieur B est en cours, le télécopieur B décide d'envoyer une télécopie au télécopieur 30. Le télécopieur B profite du lien TCP/IP existant pour ouvrir un autre lien TCP/IP avec le télécopieur 30 et émettre la télécopie vers celui-ci.

A 22h12, le télécopieur 30 n'a plus aucune session de communication en temps réel en cours mais n'a toujours pas reçu de paquets TCP/IP provenant du télécopieur A.

Avant de se déconnecter de l'Internet 200, le télécopieur 30 vérifie, dans son carnet de rendez-vous, s'il a un rendez-vous imminent et, un rendez-vous étant prévu à 22h20 avec un télécopieur E, décide de rester connecté à l'Internet 200 pour attendre ce rendez-vous.

Sensiblement à 22h20, le télécopieur 30 consulte en mode rapide sa boîte à lettres, y trouve un courrier de mise en relation contenant l'adresse IP actuelle du télécopieur E, et, comme précédemment explicité, entame une communication en temps réel avec le télécopieur E.

A 22h23, la session de communication en temps réel entre le télécopieur 30 et le télécopieur E se termine et le télécopieur 30, n'ayant toujours pas reçu de paquets TCP/IP provenant du télécopieur A, envoie à celui la télécopie qui lui était destinée par courrier électronique, à travers l'Internet 200.

A 22h25, avant de se déconnecter de l'Internet 200, le télécopieur 30 consulte sa boîte à lettres 41 et, le cas échéant, rapatrie le ou les nouveaux courriers reçus.

Dans la description ci-dessus, le télécopieur 30 fixe rendez-vous à une pluralité de télécopieurs à un moment ultérieur déterminé, de sorte que la pluralité de sessions de communication avec ces télécopieurs sont au moins en partie simultanées.

Pour des raisons d'optimisation du débit total de transmission de données qui est limité pour le télécopieur 30, celui-ci pourrait fixer rendez-vous aux télécopieurs à des moments légèrement décalés les uns des autres temporellement, de façon à ce qu'au moins certaines des sessions de communication en temps réel se suivent, sans être en partie simultanées.

Les télécopieurs pourraient comprendre une application de téléphonie vocale. Dans ce cas, ils pourraient multiplexer des sessions de communication vocale en temps réel et des sessions de communication en temps réel pour la transmission d'une télécopie à travers l'Internet.

Bien évidemment l'invention s'applique non seulement aux télécopieurs, mais également aux téléphones, et autres terminaux de communication à travers l'Internet et plus généralement à travers un réseau informatique.

## Revendications

1. Procédé de communication en temps réel entre au moins deux terminaux de communication (30, 130), à travers un réseau informatique de communication du type Internet (200), dans lequel, au cours d'une communication préalable, les deux terminaux (30, 130) se fixent un rendez-vous sur le réseau informatique (200), à un moment ultérieur déterminé, pour, sensiblement au moment du rendez-vous, après attribution par chaque terminal d'une adresse informatique et communication de celle-ci à l'autre terminal, se mettre ainsi en relation l'un avec l'autre à travers le réseau informatique (200) et entamer une communication en temps réel à travers le réseau informatique (200).

2. Procédé selon la revendication 1, dans lequel l'un des deux terminaux (30) fixe le rendez-vous à l'autre terminal (130), par courrier électronique.

3. Procédé selon la revendication 2, dans lequel le terminal (30) fixant le rendez-vous prépare un courrier électronique de prise de rendez-vous contenant, dans un champ spécifique, le moment du rendez-vous.

4. Procédé selon la revendication 3, dans lequel, après réception du courrier de prise de rendez-vous, ledit autre terminal (130) examine ledit courrier afin de prendre connaissance du moment du rendez-vous.

5. Procédé selon la revendication 1, dans lequel les deux terminaux se fixent le rendez-vous, au cours d'une communication à travers un réseau de communication (201) autre que ledit réseau informatique (200).

6. Procédé selon la revendication 1, dans lequel les deux terminaux (30, 130) se fixent le rendez-vous, au cours d'une communication en temps réel à travers ledit réseau informatique (200).

7. Procédé selon l'une des revendications 1 à 6, dans lequel, sensiblement au moment du rendez-vous, les deux terminaux (30, 130) se connectent au réseau informatique (200).

8. Procédé selon l'une des revendications 1 à 7, dans lequel les deux terminaux (30, 130) disposant chacun d'une adresse électronique sur ledit réseau informatique (200), l'un des terminaux (30) envoie à l'autre terminal (130) son adresse électronique par courrier électronique, de façon à ce que les deux terminaux (30, 130) se mettent en relation l'un avec l'autre.

9. Procédé selon la revendication 8, dans lequel ledit autre terminal (130), destiné à recevoir le courrier électronique contenant l'adresse électronique dudit terminal (30), disposant d'une boîte à lettres électronique (141), consulte fréquemment celle-ci (141), sensiblement au moment du rendez-vous, afin d'y trouver le courrier électronique contenant l'adresse électronique dudit terminal (30).

10. Procédé selon l'une des revendications 8 et 9, dans lequel, après réception du courrier contenant l'adresse électronique dudit terminal (30), ledit autre terminal (130) examine ledit courrier afin de prendre connaissance de l'adresse électronique dudit terminal (30).

11. Procédé selon l'une des revendications 1 à 10, dans lequel les deux terminaux disposant chacun d'une adresse électronique sur ledit réseau informatique (200), au moins l'un des terminaux transmet son adresse électronique à l'autre terminal par l'intermédiaire d'un serveur de rendez-vous, de façon à ce que les deux terminaux se mettent en relation l'un avec l'autre.

12. Procédé selon l'une des revendications 8 à 11, dans lequel le terminal (130) qui a reçu l'adresse électronique de l'autre terminal (30), transmet à ce dernier sa propre adresse électronique, en entamant la communication en temps réel à travers le réseau informatique (200).

13. Procédé selon l'une des revendications 1 à 12, dans lequel, dans le cas où l'un des terminaux (130) manque le rendez-vous, l'autre terminal (30) lui envoie un courrier électronique.

14. Procédé selon l'une des revendications 1 à 13, dans lequel l'un des terminaux (30) fixe des rendez-vous sur le réseau informatique (200) à une pluralité de terminaux (A, B, C, D), à un moment ultérieur déterminé.

15. Procédé selon l'une des revendications 1 à 13, dans lequel l'un des terminaux fixe des rendez-vous sur le réseau informatique (200) à une pluralité de terminaux, à une pluralité de moments ultérieurs légèrement décalés temporellement les uns des autres.

16. Terminal de communication comprenant des moyens applicatifs (14) pour la mise en oeuvre du procédé selon l'une des revendications 1 à 15.

## Patentansprüche

1. Verfahren zur Echtzeitkommunikation zwischen wenigstens zwei Kommunikationsendgeräten (30, 130) über ein Computernetz vom Typ Internet (200), wobei die beiden Endgeräte (30, 130) im Laufe einer vorherigen Kommunikation sich eine Verabredung in dem Computernetz (200) für einen bestimmten späteren Zeitpunkt festlegen, um ungefähr zum Zeitpunkt der Verabredung nach Zuteilung einer Computeradresse für jedes Endgerät und Kommunikation dieser an das andere Endgerät, sich so über das Computernetz (200) in Verbindung miteinander zu setzen und eine Echtzeitkommunikation über das Computernetz (200) zu beginnen.

2. Verfahren nach Anspruch 1, wobei das eine der beiden Endgeräte (30) die Verabredung mit dem anderen Endgerät (130) mit Hilfe von E-Mail festlegt.

3. Verfahren nach Anspruch 2, wobei das die Verabredung festlegende Endgerät (30) eine E-Mail zum Ausmachen einer Verabredung vorbereitet, die in einem spezifischen Feld den Zeitpunkt der Verabredung enthält.

4. Verfahren nach Anspruch 3, wobei das andere Endgerät (130) nach Empfang der Mail zum Ausmachen einer Verabredung die Mail untersucht, um den Zeitpunkt der Verabredung zur Kenntnis zu nehmen.

5. Verfahren nach Anspruch 1, wobei sich die beiden Endgeräte die Verabredung im Laufe einer Kommunikation über ein anderes Kommunikationsnetz (201) als das Computernetz (200) festlegen.

6. Verfahren nach Anspruch 1, wobei sich die beiden Endgeräte (30, 130) die Verabredung im Laufe einer Echtzeitkommunikation über das Computernetz (200) festlegen.

7. Verfahren nach einem der Ansprüche 1 bis 6, wobei die beiden Endgeräte (30, 130) ungefähr zum Zeitpunkt der Verabredung eine Verbindung zum Computernetz (200) aufbauen.

8. Verfahren nach einem der Ansprüche 1 bis 7, wobei die beiden Endgeräte (30, 130) jeweils über eine elektronische Adresse im Computernetz (200) verfügen und das eine Endgerät (30) dem anderen Endgerät (130) seine elektronische Adresse mit Hilfe von E-Mail sendet, so daß sich die beiden Endgeräte (30, 130) miteinander in Verbindung setzen.

9. Verfahren nach Anspruch 8, wobei das andere Endgerät (130), das zum Empfang der die elektronische Adresse des Endgerätes (30) enthaltenden E-Mail vorgesehen ist und einen elektronischen Briefkasten (141) aufweist, in diesem (141) ungefähr zum Zeitpunkt der Verabredung oft nachsieht, um dort die die elektronische Adresse des Endgerätes (30) enthaltende E-Mail zu finden.

10. Verfahren nach Anspruch 8 oder 9, wobei das andere Endgerät (130) nach Empfang der die elektronische Adresse des Endgerätes (30) enthaltenden Mail die Mail untersucht, um die elektronische Adresse des Endgerätes (30) zur Kenntnis zu nehmen.

11. Verfahren nach einem der Ansprüche 1 bis 10, wobei die beiden Endgeräte jeweils über eine elektronische Adresse im Computernetz (200) verfügen und wenigstens eines der Endgeräte seine elektronische Adresse an das andere Endgerät durch die Vermittlung eines Verabredungs-Servers überträgt, so daß sich die beiden Endgeräte miteinander in Verbindung setzen.

12. Verfahren nach einem der Ansprüche 8 bis 11, wobei das Endgerät (130), das die elektronische Adresse von dem anderen Endgerät (30) empfangen hat, an letzteres seine eigene elektronische Adresse überträgt, wobei die Echtzeitkommunikation über das Computernetz (200) begonnen wird.

13. Verfahren nach einem der Ansprüche 1 bis 12, wobei in dem Fall, daß das eine der Endgeräte (130) die Verabredung verpaßt, das andere Endgerät (30) ihm eine E-Mail sendet.

14. Verfahren nach einem der Ansprüche 1 bis 13, wobei das eine der Endgeräte (30) Verabredungen im Computernetz (200) für einen bestimmten späteren Zeitpunkt mit einer Mehrzahl von Endgeräten (A, B, C, D) festlegt.

15. Verfahren nach einem der Ansprüche 1 bis 13, wobei das eine der Endgeräte Verabredungen im Computernetz (200) mit einer Mehrzahl von Endgeräten für eine Mehrzahl zeitlich leicht zueinander versetzter Zeitpunkte festlegt.

16. Kommunikationsendgerät mit Anwendungsmitteln (14) zur Durchführung des Verfahrens nach einem der Ansprüche 1 bis 15.

## Claims

1. Method of real-time communication between at least two communication terminals (30, 130), through an information communication network of the Internet type (200), wherein, in the course of a preliminary communication, the two terminals (30, 130) fix a rendezvous on the information network (200), at a specific later time, in order, substantially at the time of the rendezvous, after allocation by each terminal of a computer address and communication of the latter to the other terminal, to make contact with one another through the information network (200) and start a real-time communication through the information network (200).

2. Method according to claim 1, wherein one of the two terminals (30) fixes the rendezvous at the other terminal (130), via e-mail.

3. Method according to claim 2, wherein the terminal (30) fixing the rendezvous prepares an e-mail arranging the rendezvous which contains, in a specific field, the time of the rendezvous.

4. Method according to claim 3, wherein, after receipt of the e-mail arranging the rendezvous, said other terminal (130) examines said e-mail in order to become acquainted with the time of the rendezvous.

5. Method according to claim 1, wherein the two terminals fix the rendezvous during a communication through a communication network (201) other than said information network (200).

6. Method according to claim 1, wherein the two terminals (30, 130) fix the rendezvous during a real-time communication through said information network (200).

7. Method according to one of claims 1 to 6, wherein, substantially at the time of the rendezvous, the two terminals (30, 130) connect to the information network (200).

8. Method according to one of claims 1 to 7, wherein the two terminals (30, 130) each having an electronic address on said information network (200), one of the terminals (30) sends to the other terminal (130) its electronic address by e-mail, so that the two terminals (30, 130) make contact with each other.

9. Method according to claim 8, wherein said other terminal (130), intended to receive the e-mail containing the electronic address of said terminal (30), having an electronic mailbox (141), frequently consults the latter (141), substantially at the time of the rendezvous, in order to find in the mailbox the e-mail containing the electronic address of said terminal (30).

10. Method according to one of claims 8 and 9, wherein, after receipt of the e-mail containing the electronic address of said terminal (30), said other terminal (130) examines said e-mail in order to become acquainted with the electronic address of said terminal (30).

11. Method according to one of claims 1 to 10, wherein the two terminals each having an electronic address on said information network (200), at least one of the terminals transmits its electronic address to the other terminal through a rendezvous server, so that the two terminals make contact with each other.

12. Method according to one of claims 8 to 11, wherein the terminal (130) which has received the electronic address of the other terminal (30), transmits its own electronic address to the latter, starting the real-time communication through the information network (200).

13. Method according to one of claims 1 to 12, wherein, in the case where one of the terminals (130) misses the rendezvous, the other terminal (30) sends it an e-mail.

14. Method according to one of claims 1 to 13, wherein one of the terminals (30) fixes rendezvous on the information network (200) at a plurality of terminals (A, B, C, D), at a specific later time.

15. Method according to one of claims 1 to 13, wherein one of the terminals fixes rendezvous on the information network (200) at a plurality of terminals, at a plurality of later times which are slightly offset temporally from one another.

16. Communication terminal comprising application means (14) for implementing the method according to one of claims 1 to 15.
